# EUROPÄISCHE PATENTSCHRIFT

(11) **EP 0 742 989 B1**
(45) Veröffentlichungstag und Bekanntmachung des Hinweises auf die Patenterteilung: **13.08.1997**
(21) Anmeldenummer: 95909618.1
(22) Anmeldetag: 01.02.1995
(51) Int. Cl.: H04Q 7/22, H04Q 7/38, H04L 12/56

(54) **VERFAHREN ZUR PAKETWEISEN DATENÜBERTRAGUNG IN EINEM MOBILFUNKNETZ**
PROCESS FOR TRANSMITTING DATA IN PACKETS IN A MOBILE RADIO SYSTEM
PROCEDE POUR LA TRANSMISSION DE DONNEES EN PAQUETS DANS UN SYSTEME MOBILE RADIO

(30) Priorität: 02.02.1994 DE 4402903
(43) Veröffentlichungstag der Anmeldung: 20.11.1996
(73) Patentinhaber: DeTeMobil Deutsche Telekom MobilNet GmbH, 53227 Bonn (DE)
(72) Erfinder: PERNICE, Frieder, D-64846 Gross-Zimmern (DE); BERGMANN, Ansgar, D-53111 Bonn (DE)
(74) Vertreter: Riebling, Peter, Dr.-Ing.
(86) Internationale Anmeldenummer: DE9500121
(87) Internationale Veröffentlichungsnummer: WO9521508

(56) Entgegenhaltungen:
- ICC'93. IEEE INTERNATIONAL CONFERENCE ON COMMUNICATIONS '93, Bd. 2, 23.Mai 1993 - 26.Mai 1993 GENEVA, CH, Seiten 1010-1016, XP 000371230 T.SUZUKI ET AL. 'A CONTENTION-BASED RESERVATION PROTOCOL USING A TDD CHANNEL FOR WIRELESS LOCAL AREA NETWORKS: A PERFORMANCE ANALYSIS'
- ICC'93. IEEE INTERNATIONAL CONFERENCE ON COMMUNICATIONS '93, Bd. 1, 23.Mai 1993 - 26.Mai 1993 GENEVA, CH, Seiten 172-176, XP 000371088 W.-C.WONG ET AL. 'Integrated data and speech transmission using packet reservation multiple access'
- IEEE TRANSACTIONS ON VEHICULAR TECHNOLOGY, Bd. 39, Nr. 4, November 1990 NEW YORK, US, Seiten 340-351, XP 000173255 N.M.MITROU ET AL. 'A Reservation Multiple Access Protocol for Microcellular Mobile-Communication Systems'
- 41ST IEEE VEHICULAR TECHNOLOGY CONFERENCE. GATEWAY TO THE FUTURE. TECHNOLOGY IN MOTION, 19.Mai 1991 - 22.Mai 1991 ST. LOUIS, MO, US, Seiten 399-407, XP 000260211 DR. J.L.HAINE 'A NEW RADIO ACCESS PROTOCOL AND NETWORK ARCHITECTURE FOR MOBILE PACKET DATA'
- MRC MOBILE RADIO CONFERENCE 1991, 13.November 1991 - 15.November 1991 NICE, FR, Seiten 251-258, I.BERBERANA ET AL. 'A PACKET MEDIA ACCESS PROTOCOL FOR MOBILE NETWORKS'
- 41ST IEEE VEHICULAR TECHNOLOGY CONFERENCE. GATEWAY TO THE FUTURE. TECHNOLOGY IN MOTION, 19.Mai 1991 - 22.Mai 1991 ST.LOUIS, MO, US, Seiten 408-413, XP 000260212 B.WALKE ET AL. 'CELLPAC: A Packet Radio Protocol Applied to the Cellular GSM Mobile Radio Network'

## Beschreibung

Die Erfindung betrifft Verfahren zur paketweisen Datenübertragung in einem Mobilfunknetz mit Mobilstationen und Basisstationen.

Die paketweise Datenübertragung, wie sie beispielsweise die Deutsche Telekom als Datex-P-Dienst anbietet, hat den Vorteil, daß Übertragungskapazität nur dann benötigt wird, wenn tatsächlich Daten übertragen werden. Trotzdem besteht während der Gesamtzeit, also während der Übertragung der Datenpakete und während dazwischenliegender Pausen, eine pseudo-permanente Verbindung zwischen den Teilnehmern, so daß für jeden zu übertragenden Datenblock nicht erst eine neue Verbindung aufgebaut werden muß.

Außer festen Netzen, wie beispielsweise dem herkömmlichen Telefonnetz, sind Mobilfunknetze bekanntgeworden, bei denen Funkverbindungen zwischen Mobilstationen und jeweils einen örtlichen Bereich (Zelle) bedienenden Basisstationen Funkverbindungen aufgebaut werden können, wobei auf jeweils einer Frequenz eine Vielzahl von Zeitschlitzen zur Verfügung steht. Ein solches Mobilfunknetz ist beispielsweise das "European Digital Cellular Telecommunication System", das in der Technischen Specifikation ETSI-SMG, GSM 05.01, Version 4.0.1, Oktober 1992 beschrieben ist, welche von dem European Telecommunications Standards Institute herausgegeben wurde. Dieses System wird GSM (global system for mobile communications) genannt.

Durch DE 38 28 601 C2 sind Maßnahmen zur Beschleunigung des Verbindungsaufbaus in einem Durchschaltenetz bekanntgeworden, die darin bestehen, daß eine Verbindung auch in einem intermetierenden Übertragungsmodus herstellbar ist, wobei ein Kennzeichen für diesen Übertragungsmodus beigegeben wird, daß an den Netzwerksteuerungen Einrichtungen zur Identifizierung des Kennzeichens vorgesehen sind, daß eine Netzwerksteuerung nur in Reaktion auf eine Datenübertragungsanforderung von einer identifizierten Verbindung einen Verbindungsweg bilden kann und daß in dem intermetierenden Übertragungsmodus ein Haltezustand für die hergestellte Verbindung möglich ist, bei dem der Verbindungsweg für eine andere Datenübertragung verfügbar ist. Diese für ein Festnetz typischen Maßnahmen sind jedoch für einen Betrieb innerhalb eines Mobilfunknetzes nicht geeignet.

Durch Goodman, D.J.: "Trends in Cellular and Cordless Communications" in: IEEE Communications Magazine, June 1991, Seiten 31 bis 40 ist ferner ein Vorschlag eines Mobilfunknetzes auf der Basis einer Paketdatenübertragung bekanntgeworden. Dabei ist eine Steuerung vorgesehen, welche sich wesentlich von der bei den bestehenden Mobilfunknetzen unterscheidet, wobei insbesondere im Paketkopf eine Kenngröße mitübertragen wird, welche die Art der übertragenen Information identifiziert.

Ein einschlägiger Stand der Technik gemäß des Oberbegriffs des Anspruchs 1 ist auch den Dokumenten
IEEE TRANSACTIONS ON VEHICULAR TECHNOLOGY, Bd. 39, Nr. 4 Nov. 1990, New York, US, Seiten 340-351, XP 000173255, N.M. Mitrou et al. "A reservation multiple access protocol for microcellular mobile communication systems" und
41st IEEE VEHICULAR TECHNOLOGY CONFERENCE, Gateway to the future, technology in motion, 19.05.-22.05.91, St. Louis, MO, US, Seiten 408 bis 413, XP 000260212, B. Walke et al: "CELLPAC: A Packet Radio Protocol Applied to the Cellular GSM Mobile Radio Network" zu entnehmen.

Aufgabe der vorliegenden Erfindung ist es jedoch, eine paketweise Datenübertragung in einem an sich als Durchschaltenetz ausgelegten Mobilfunknetz mit Mobilstationen und Basisstationen zu ermöglichen.

Diese Aufgabe wird erfindungsgemäß dadurch gelöst,
- daß bei dem Aufbau einer Funkverbindung zur paketweisen Datenübertragung der jeweils beteiligten Mobilstation ein Verkehrskanal und eine für die jeweilige paketweise Datenübertragung gültige Kennzahl zugeteilt werden,
- daß die Übertragung einzelner Datenpakete in dem zugeteilten Verkehrskanal erfolgt,
- daß ein gemeinsamer Steuerkanal mehreren Mobilstationen, welchen der Verkehrskanal zur paketweisen Datenübertragung zugeteilt ist, zur Verfügung steht und
- daß in dem gemeinsamen Steuerkanal Datenpakete unter Verwendung der Kennzahl als zu der jeweiligen Mobilstation gehörend gekennzeichnet werden.

Das erfindungsgemäße Verfahren hat den Vorteil, daß bestehende Einrichtungen der derzeitigen Mobilfunknetze auch für die paketweise Datenübertragung weitgehend verwendet werden können. Ferner bestehen Ausgestaltungsmöglichkeiten des erfindungsgemäßen Verfahrens an die Erfordernisse im einzelnen. So können beispielsweise die Paketlänge oder die zur Sendung eines Datenpakets benötigte maximale Verzögerungszeit definiert werden.

Eine Kompatibilität mit den bestehenden Diensten wird gemäß einer Weiterbildung dadurch ermöglicht, daß in einem Mobilfunknetz nach dem GSM-Standard für die Übertragung von der Mobilstation zur Basisstation als Steuerkanäle im ALOHA-Mehrfachzugriffsverfahren RACH-Kanäle und Zeitschlitze vorgegebener Rahmen eines dedizierten Kanals verwendet werden.

Eine vorteilhafte Codierung wie bei den bestehenden Diensten ist bei dieser Weiterbildung insbesondere dadurch möglich, daß die Übertragung der Datenpakete in Blöcken erfolgt, wobei jeweils ein Block in vier Zeitschlitzen innerhalb eines Multirahmens übertragen wird.

Eine vorteilhafte Ausgestaltung dieser Weiterbildung besteht darin, daß von der Mobilstation in Zeitschlitzen vorgegebener Rahmen eines dedizierten Kanals neben weiteren Steuerinformationen die Kennzahl und in restlichen Zeitschlitzen der Rahmen des dedizierten Kanals Daten übertragen werden, wobei jeweils vier geradzahlige und vier ungradzahlige Zeitschlitze einer Mobilstation zugeordnet werden.

Eine Kompatibilität mit den bereits bestehenden Diensten wird ferner durch eine andere Weiterbildung der Erfindung dadurch ermöglicht, daß in einem Mobilfunknetz nach dem GSM-Standard für die Übertragung von der Basisstation zu einer Mobilstation als Steuerkanal die Zeitschlitze vorgegebener Rahmen eines dedizierten Kanals verwendet werden. Dabei wird eine gleichzeitige quasi-permanente Verbindung vorzugsweise dadurch ermöglicht, daß die Zeitschlitze, welche den gemeinsamen Steuerkanal bilden, jeweils Anrufmeldungen enthalten, die sich auf Mobilstationen, für welche die im folgenden Zeitschlitz übertragenen Daten bestimmt sind, oder auf beliebige andere Mobilstationen beziehen, welche in folgenden Blöcken Daten übertragen dürfen.

Auch bei dieser Weiterbildung trägt zu einer vorteilhaften Codierung bei, daß die Übertragung der Datenpakete in Blöcken erfolgt, wobei jeweils ein Block in vier Zeitschlitzen innerhalb eines Multirahmens übertragen wird. Auch bei der Übertragung von der Basisstation zur Mobilstation ist es vorteilhaft, wenn in Zeitschlitzen vorgegebener Rahmen eines dedizierten Kanals neben weiteren Steuerinformationen eine Anrufmeldung für die beteiligte Mobilstation und in restlichen Zeitschlitzen der Rahmen des dedizierten Kanals Daten übertragen werden, wobei jeweils vier geradzahlige und vier ungradzahlige Zeitschlitze einer für die paketweise Datenübertragung aktivierten Mobilstation zugeordnet werden.

Da die Kennzahlen nur temporär und nur jeweils für eine Zelle vergeben werden, werden nicht allzu viele verschiedene Kennzahlen benötigt, so daß bei einer vorteilhaften Ausgestaltung vorgesehen ist, daß die Kennzahl sieben Binärstellen umfaßt. Aus Gründen des Datenschutzes ist dabei vorgesehen, daß die Übertragung der Kennzahl verschlüsselt erfolgt.

Zusätzliche Codiereinrichtungen für die Codierung der Datenpakete sind gemäß einer anderen Weiterbildung der Erfindung nicht erforderlich, wenn die Übertragung der Datenpakete mit einem Code erfolgt, der auch für die Steuerkanäle vorgesehen ist.

Eine Erkennung und/oder Korrektur von Übertragungsfehlern im Rahmen des erfindungsgemäßen Verfahrens ist bei vielen Anwendungsfällen nicht erforderlich, beispielsweise wenn die Teilnehmer diese Maßnahmen in ihrem Bereich durchführen. Eine einfache Möglichkeit zur Erhöhung der Übertragungssicherheit ist bei dem erfindungsgemäßen Verfahren jedoch dadurch gegeben, daß bei fehlerhaftem Empfang eines Datenblocks, was beispielsweise durch Auswertung von Parity-Bits festgestellt wird, die jeweils sendende Station mittels einer Fehlermeldung zur nochmaligen Übertragung des Datenpakets aufgefordert wird. Dabei wird vorzugsweise die Fehlermeldung von einem vorgegebenen Wert eines Bits eines die Kennzahl enthaltenden Oktetts gebildet.

Eine vorteilhafte Ausgestaltung des erfindungsgemäßen Verfahrens sieht vor, daß bei der Übertragung von der Basisstation zu Mobilstationen keine Regelung der Sendeleistung über die Empfangsfeldstärke erfolgt.

Eine andere vorteilhafte Ausgestaltung besteht darin, daß die paketweise Datenübertragung vorzugsweise auf demjenigen Träger erfolgt, der auch den Rundfunksteuerkanal (broadcast control channel) überträgt. Bei diesem erfolgt ohnehin keine Sendeleistungskontrolle.

Eine paketweise Datenübertragung kann in einem Mobilfunknetz auch dadurch vorgenommen werden, daß bei einem von einer Mobilstation ausgehenden Verbindungsaufbau von der Mobilstation die Information, daß eine paketweise Datenübertragung erfolgen soll, und die Anzahl der zur Verfügung stellenden Blöcke gesendet werden.

Dabei kann vorgesehen sein, daß die Information, daß eine paketweise Datenübertragung gewünscht wird, und die Anzahl der Datenblöcke unmittelbar mit der Kanalanforderung (channel request) gesendet werden oder wenn nach einer Kanalanforderung (channel request) die Basisstation einen sofortigen Zugang (immediate access) erteilt hat.

Eine paketweise Datenübertragung in umgekehrter Richtung kann dabei dadurch eingeleitet werden, daß die Mobilstation von der Basisstation angerufen wird, daß ein Stand-alone dedicated control channel (SDCCH) zugeordnet wird und daß eine L3-Meldung gesendet wird, die das Ende der Übertragung und die Einwegeigenschaft des Kanals anzeigt. Ferner kann vorzugsweise zur paketweisen Datenübertragung von der Basisstation zur Mobilstation ein Rundfunkkanal (broadcast channel) benutzt werden und die Adressierung und gegebenenfalls die Datensicherung mit an sich bekannten Mitteln durchgeführt werden.

Ausführungsbeispiele der Erfindung sind in der Zeichnung anhand mehrerer Figuren dargestellt und in der nachfolgenden Beschreibung näher erläutert. Es zeigt:
- Fig. 1: die Struktur eines Multirahmens mit 26 Zeitschlitzen, der zur Übertragung von Datenpaketen von einer Basisstation zu einer Mobilstation benutzt wird und
- Fig. 2: eine Struktur eines Multirahmens mit 26 Zeitschlitzen zur Übertragung von Datenpaketen von einer Mobilstation zu einer Basisstation.

Bei der Beschreibung des Ausführungsbeispiels werden in Anlehnung an die übliche Fachsprache im folgenden auch englische Fachausdrücke verwendet, wie sie in GSM-Standard definiert sind. Zur Funkverbindung zwischen den Mobilstationen und jeweils einer Basisstation stehen in der Regel mehrere Frequenzen zur Verfügung. Jede dieser Frequenzen wird mit einem Zeitmultiplexsignal moduliert, das in Zeitschlitze (time slots) von jeweils 156,25 Bit-Periodendauer eingeteilt ist. Acht Zeitschlitze bilden einen Rahmen (frame), von denen wiederum 26 bzw. 51 einen Multirahmen (multiframe) bilden. 51 bzw. 26 der Multirahmen bilden einen Superrahmen (superframe), von dem wiederum 2048 einen Hyperrahmen (hyperframe) bilden. Ein physikalsicher Kanal ist definiert durch eine Sequenz von Rahmen, eine Nummer eines Zeitschlitzes und eine Frequenzsprungsequenz.

Logische Kanäle dienen entweder zur Übertragung der Nutzdaten (Verkehrskanäle, traffic channels TCH) oder zur Übertragung von Steuerinformationen (Steuerkanäle, control channels CCH) - im folgenden auch Signalisierung genannt. Entsprechend ihrer Datenrate und ihrer speziellen Aufgabe sind die Verkehrskanäle und Steuerkanäle in eine größere Anzahl von Arten unterteilt, die in der folgenden Beschreibung nur angesprochen werden, wenn es zur Erläuterung der Erfindung erforderlich ist.

Der mit dem erfindungsgemäßen Verfahren angebotene Dienst wird im folgenden GPRS (= general packet radio services) genannt. Eine Anforderung dieses Dienstes kann von einer Mobilstation oder von einem Teilnehmer eines ortsfesten Fernmeldenetzes ausgehen. Ziel kann ebenfalls sowohl eine (andere) Mobilstation oder ein Teilnehmer eines ortsfesten Fernmeldenetzes sein. Zur Erläuterung der Erfindung wird im folgenden lediglich die Strecke zwischen einer Mobilstation und einer Basisstation bzw. umgekehrt betrachtet. Der Zustand des Netzes, während dem nach der Aufnahme einer Verbindung eine paketweise Übertragung von Daten möglich ist, wird quasi-permanente Verbindung genannt.

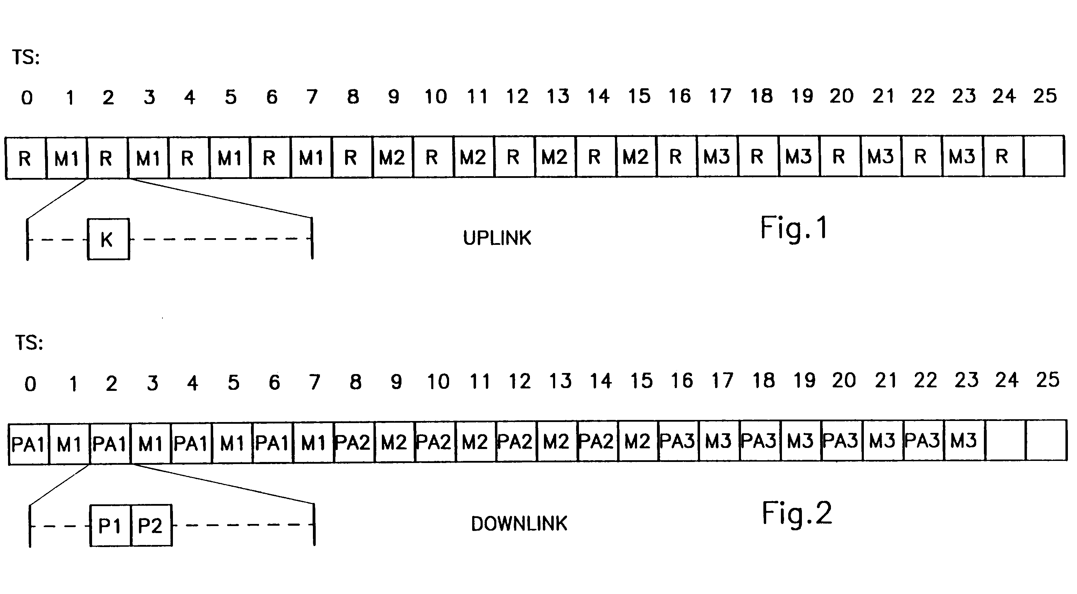

Zur Übertragung der Datenpakete werden bei der beschriebenen Ausführungsform die normalen Verkehrskanäle TCH als GPRS-Kanäle benutzt. Dabei kann die Anzahl der für GPRS bereitgehaltenen Kanäle fest vorgegeben sein oder je nach Bedarf variiert werden. Für die Übertragung von einer Mobilstation zu einer Basisstation (uplink UL) dienen zwei verschiedene Kanäle. Davon wird der eine Kanal als Steuerkanal R (Fig. 1) benutzt und stellt den für GPRS Zwecke modifizierten Random Access Control Channel (RACH) dar. Bei dem in Fig. 1 dargestellten Multirahmen werden alle geradzahligen Zeitschlitze TS, nämlich die Zeitschlitze 0, 2, ... 24, als R-Kanäle verwendet. Dabei sind sowohl der Burst-Typ als auch die Codierung entsprechend dem unmodifizierten RACH-Kanal ausgelegt.

Der R-Kanal enthält allerdings 7 Bit für die Kennzahl K, die dementsprechend Werte zwischen 0 und 127 einnehmen kann. Ein weiteres Bit ist für die Kapazitätsanforderung von der Mobilstation zur Basisstation vorgesehen, wenn es den Wert 0 einnimmt, im Falle des Wertes 1 eine Fehlermeldung, falls bei einer Datenübertragung in entgegengesetzter Richtung ein Fehler erkannt wird. Je Multirahmen gibt es 13 GPRS-RACH-Zeitschlitze.

Für jede Meldung (message) M sind vier Zeitschlitze vorgesehen. Die Verteilung der Meldungen auf die Zeitschlitze (interleaving) und die Codierung erfolgt in gleicher Weise wie die Signalisierung in den Steuerkanälen. Bei dem in Fig. 1 dargestellten Beispiel sind drei Meldungen mit jeweils vier Zeitschlitzen wie folgt auf den Multirahmen verteilt:
M1 = TS 1, 3, 5, 7,
M2 = TS 9, 11, 13, 15,
M3 = TS 17, 19, 21, 23.
Der Zeitschlitz TS 25 bleibt dabei frei. Ein anderes Interleaving zur Erhöhung der Übertragungsqualität kann je nach Umständen im einzelnen gewählt werden.

Bei der Übertragung von der Basisstation zur Mobilstation (downlink DL) weisen die Multirahmen die in Fig. 2 dargestellte Struktur auf. Jeweils vier geradzahlige Zeitschlitze TS 0 bis TS 22 enthalten einen Steuerkanal CCCH (common control channel), der zur Durchführung des erfindungsgemäßen Verfahrens gegenüber dem über dem GSM-Standard variiert wurde und im folgenden PA (= paging) genannt wird. In dem dargestellten Multirahmen sind drei Steuerkanäle PA1, PA2 und PA3 vorhanden. Sie enthalten jeweils Informationen, um einer Mobilstation vier Zeitschlitze M1 bzw. M2 bzw. M3 zuzuweisen, in welchen die paketweise Datenübertragung erfolgt. Interleaving und Codierung der PA-Meldungen entsprechen denen der üblichen Signalisierung in den Steuerkanälen.

In den PA-Meldungen (paging messages) sind jeweils zwei Anrufmeldungen P1, P2 zu je acht Bit enthalten, wobei die eine dazu dient, der zugeordneten Mobilstation die folgenden vier Zeitschlitze M zuzuweisen, während mit Hilfe der anderen Anrufmeldung P2 eine andere Mobilstation gerufen werden kann.

Wie bereits erwähnt, werden die Daten über die Meldungen M1, M2 und M3 übertragen, wobei für jede Meldung (message) vier Zeitschlitze vorgesehen sind. Interleaving und Codierung erfolgen wiederum wie bei der Signalisierung. Je Multirahmen sind drei Meldungen mit je vier Zeitschlitzen vorgesehen, nämlich die Meldung M1 in den Zeitschlitzen 1, 3, 5, 7, die Meldung M2 in den Zeitschlitzen 9, 11, 13, 15 und die Meldung M3 in den Zeitschlitzen 17, 19, 21 und 23. Die Zeitschlitze 24 und 25 bleiben frei.

Der von den Zeitschlitzen M gebildete GPRS-Kanal arbeitet ohne Verschlüsselung, es sind jedoch die Teilnehmer anonym, weil die Kennzahlen K verschlüsselt zugewiesen werden. Außerdem benutzt der GPRS-Kanal normale SFH (slow frequency hopping). Die Anwendung einer Sendeleistungsregelung (power control) ist im GPRS-Kanal nicht ohne weiteres möglich, da bei der paketweisen Datenübertragung ein Gegenkanal in der Regel nicht gleichzeitig zur Verfügung steht.

Zur weiteren Erläuterung werden im folgenden verschiedene Prozeduren zum Wechsel von einem Betriebszustand (mode) in einen anderen betrachtet. Dabei werden drei Betriebszustände unterschieden, nämlich die Empfangsbereitschaft einer Mobilstation (idle mode), die pseudo-permanente Verbindung und die Übertragung eines Datenpaketes. Während der Empfangsbereitschaft befindet sich eine für den GPRS ausgerüstete Mobilstation (GPRS-MS) wie eine herkömmliche Mobilstation auf dem BCCH (broadcast control channel).

Will eine Mobilstation in den GPRS-Mode wechseln, führt sie Random Access aus und wechselt auf den SDCCH (stand-alone dedicated control channel). Daraufhin erfolgt eine Authentikation und ein Setzen des Verschlüsselungsmodus in an sich bekannter Weise. Danach wird ein GPRS-Kanal angefordert, worauf die Basisstation der Mobilstation eine Kennzahl zuweist, welche zur Mobilstation in verschlüsselter Form übertragen wird. Außerdem wird ein GPRS-Kanal zugewiesen, was wiederum wie die normale Zuweisung eines Verkehrskanals TCH (traffic channel) durchgeführt wird. Nach dieser Prozedur befindet sich die Mobilstation, die jetzt noch inaktiv ist, auf dem GPRS-Kanal.

Will ein anderer Teilnehmer mit einer Mobilstation über GPRS kommunizieren, erfolgt ein Anruf (paging) der Mobilstation MS sowie ein Random Access in herkömmlicher Weise. Daran schließt sich ein Wechsel auf SDCCH, eine Authentikation und Setzen eines Verschlüsselungsmodus an. Nun erfolgt die Zuweisung einer Kennzahl und eines Kanals wie im oben beschriebenen Fall.

Eine Mobilstation, die inaktiv auf dem GPRS-Kanal ist, sich also in einer pseudo-permanenten Verbindung mit der Basisstation befindet, will eine GPRS-Meldung senden. Dazu wird auf einem der R-Zeitschlitze (Fig. 1) ein Random Access durchgeführt. Das Netz bzw. die Basisstation ermittelt dann den Zeitversatz (TA = time advance) und weist mit PA (Fig. 2) vier Uplink-Zeitschlitze M zu. Hier kann gegebenenfalls eine Angabe für die Sendeleistungskontrolle mitübertragen werden. Die zwei Anrufmeldungen P1 und P2 in PA werden nur benutzt, wenn an andere für GPRS geeignete Mobilstationen, die sich auf den gleichen GPRS-Kanal befinden, Daten übertragen werden sollen oder wenn Übertragungsfehler zu korrigieren sind.

Liegt eine GPRS-Meldung für eine Mobilstation vor, so wird die Mobilstation über P1 einer PA-Meldung gerufen. Das hat zur Folge, daß dieser Mobilstation im Downlink die gleichen vier Zeitschlitze zugewiesen werden, wie der oben angenommenen Mobilstation für den Uplink. Eine Zeitsteuerung TA sowie eine Sendeleistungskontrolle sind dabei nicht erforderlich.

Liegt ein normaler Telefonanruf für eine Mobilstation vor, erfolgt ein Rufen über P2 einer PA-Meldung. Dieses hat zur Folge, daß die gerufene Mobilstation auf den BCCH wechselt, dort Random Access durchführt, wonach die weiteren Schritte wie ein normaler Mobiltelefon-Verbindungsaufbau erfolgen.

Bei dem Ausführungsbeispiel ist eine Quittungsgabe für richtig empfangene M-Meldungen nicht vorgesehen. Wurde jedoch von einer Mobilstation eine M-Meldung falsch empfangen, wird dieses über eine Auswertung des Parity-Bits festgestellt. Über Random Access, bei welchem das achte Bit auf "1" gesetzt ist, wird dann der Basisstation mitgeteilt, daß die letzte Meldung zu wiederholen ist. Das gleiche Verfahren wird bei einer Übertragung von einer Mobilstation zu einer Basisstation durchgeführt, wobei die Fehlermeldung über P2 durch Setzen des achten Bits auf "1" übertragen wird.

Das Beenden der pseudo-permanenten Verbindung kann von Seiten der Mobilstation dadurch erfolgen, daß sich die Mobilstation auf dem normalen RACH, SDCCH meldet und die Beendigung bekanntgibt - gegebenenfalls unter Angabe der Kennzahl und des Kanals. Beendet ein Festnetzteilnehmer die Verbindung, ruft die Basisstation (BSS) die Mobilstation über P2, worauf sich diese über RACH, SDCCH meldet, wo die Basisstation der Mobilstation die Beendigung bekannt gibt.

Wenn eine Mobilstation die PA- und M-Meldungen nicht mehr gut empfängt oder durch Vergleich feststellt, daß andere Basisstationen einen besseren C1-Wert haben, meldet sie sich selbst bei der neuen BTS unter Angabe der Kennzahl, der alten Basisstation und des alten GPRS-Kanals als CALL-Referenz (eine Art von CALL reestablishment) an. Damit ist das Hand-over in der Verantwortung der Mobilstation.

Alternativ kann die Mobilstation auf den BCCH, RACH, auf SDCCH gehen, wo eine normale Meßwertübertragung erfolgt. BSS leitet das Hand-over ein.

Eine weitere Alternative besteht darin, daß das BSS die hand-over-verdächtigen Mobilstationen zur Übertragung der gemachten Messungen pollt, wenn Uplink-M-Kapazität frei ist. BSS leitet dann das Hand-over ein.

## Patentansprüche

1. Verfahren zur paketweisen Datenübertragung in einem an sich als Durchschaltenetz ausgelegten Mobilfunknetz mit Mobilstationen und Basisstationen, dadurch gekennzeichnet,
- daß bei dem Aufbau einer Funkverbindung zur paketweisen Datenübertragung der jeweils beteiligten Mobilstation ein Verkehrskanal und eine für die jeweilige paketweise Datenübertragung gültige Kennzahl zugeteilt werden,
- daß die Übertragung einzelner Datenpakete in dem zugeteilten Verkehrskanal erfolgt,
- daß ein gemeinsamer Steuerkanal mehreren Mobilstationen, welchen der Verkehrskanal zur paketweisen Datenübertragung zugeteilt ist, zur Verfügung steht und
- daß in dem gemeinsamen Steuerkanal Datenpakete unter Verwendung der Kennzahl als zu der jeweiligen Mobilstation gehörend gekennzeichnet werden.

2. Verfahren nach Anspruch 1, dadurch gekennzeichnet, daß in einem Mobilfunknetz nach dem GSM-Standard für die Übertragung von der Mobilstation zur Basisstation als Steuerkanäle im ALOHA-Mehrfachzugriffsverfahren RACH-Kanäle und Zeitschlitze vorgegebener Rahmen eines dedizierten Kanals verwendet werden.

3. Verfahren nach Anspruch 2, dadurch gekennzeichnet, daß die Übertragung der Datenpakete in Blöcken erfolgt, wobei jeweils ein Block in vier Zeitschlitzen innerhalb eines Multirahmens übertragen wird.

4. Verfahren nach Anspruch 3, dadurch gekennzeichnet, daß von der Mobilstation in Zeitschlitzen vorgegebener Rahmen eines dedizierten Kanals neben weiteren Steuerinformationen die Kennzahl und in restlichen Zeitschlitzen der Rahmen des dedizierten Kanals Daten übertragen werden, wobei jeweils vier geradzahlige und vier ungradzahlige Zeitschlitze einer Mobilstation zugeordnet werden.

5. Verfahren nach einem der vorhergehenden Ansprüche, dadurch gekennzeichnet, daß in einem Mobilfunknetz nach dem GSM-Standard für die Übertragung von der Basisstation zu einer Mobilstation als Steuerkanal die Zeitschlitze vorgegebener Rahmen eines dedizierten Kanals verwendet werden.

6. Verfahren nach Anspruch 5, dadurch gekennzeichnet, daß die Zeitschlitze, welche den gemeinsamen Steuerkanal bilden, jeweils Anrufmeldungen enthalten, die sich auf Mobilstationen, für welche die im folgenden Zeitschlitz übertragenen Daten bestimmt sind, oder auf beliebige andere Mobilstationen beziehen, welche in folgenden Blöcken Daten übertragen dürfen.

7. Verfahren nach einem der Ansprüche 5 oder 6, dadurch gekennzeichnet, daß in Zeitschlitzen vorgegebener Rahmen eines dedizierten Kanals neben weiteren Steuerinformationen eine Anrufmeldung für die beteiligte Mobilstation und in restlichen Zeitschlitzen der Rahmen des dedizierten Kanals Daten übertragen werden, wobei jeweils vier geradzahlige und vier ungradzahlige Zeitschlitze einer für die paketweise Datenübertragung aktivierten Mobilstation zugeordnet werden.

8. Verfahren nach einem der vorhergehenden Ansprüche, dadurch gekennzeichnet, daß die Kennzahl sieben Binärstellen umfaßt.

9. Verfahren nach einem der vorhergehenden Ansprüche, dadurch gekennzeichnet, daß die Übertragung der Kennzahl verschlüsselt erfolgt.

10. Verfahren nach einem der vorhergehenden Ansprüche, dadurch gekennzeichnet, daß die Übertragung der Datenpakete mit einem Code erfolgt, der auch für die Steuerkanäle vorgesehen ist.

11. Verfahren nach einem der vorhergehenden Ansprüche, dadurch gekennzeichnet, daß bei fehlerhaftem Empfang eines Datenblocks, was beispielsweise durch Auswertung von Parity-Bits festgestellt wird, die jeweils sendende Station mittels einer Fehlermeldung zur nochmaligen Übertragung des Datenpakets aufgefordert wird.

12. Verfahren nach Anspruch 11, dadurch gekennzeichnet, daß die Fehlermeldung von einem vorgegebenen Wert eines Bits eines die Kennzahl enthaltenden Oktetts gebildet wird.

13. Verfahren nach einem der vorhergehenden Ansprüche, dadurch gekennzeichnet, daß bei der Übertragung von der Basisstation zu Mobilstationen keine Regelung der Sendeleistung über die Empfangsfeldstärke erfolgt.

14. Verfahren nach einem der vorhergehenden Ansprüche, dadurch gekennzeichnet, daß die paketweise Datenübertragung vorzugsweise auf demjenigen Träger erfolgt, der auch den Rundfunksteuerkanal (broadcast control channel) überträgt.

15. Verfahren nach Anspruch 1, dadurch gekennzeichnet, daß bei einem von einer Mobilstation ausgehenden Verbindungsaufbau von der Mobilstation die Information, daß eine paketweise Datenübertragung erfolgen soll, und die Anzahl der zur Verfügung zu stellenden, aus jeweils mehreren Zeitschlitzen bestehenden Blöcken gesendet werden.

16. Verfahren nach Anspruch 15, dadurch gekennzeichnet, daß die Information, daß eine paketweise Datenübertragung gewünscht wird, und die Anzahl der Datenblöcke unmittelbar mit der Kanalanforderung (channel request) gesendet werden.

17. Verfahren nach Anspruch 15, dadurch gekennzeichnet, daß die Information, daß eine paketweise Datenübertragung gewünscht wird, und die Anzahl der Datenblöcke gesendet werden, wenn nach einer Kanalanforderung (channel request) die Basisstation einen sofortigen Zugang (immediate access) erteilt hat.

18. Verfahren nach Anspruch 15, dadurch gekennzeichnet, daß die Mobilstation von der Basisstation angerufen wird, daß ein Stand-alone dedicated control channel (SDCCH) zugeordnet wird und daß eine L3-Meldung gesendet wird, die das Ende der Übertragung und die Einwegeigenschaft des Kanals anzeigt.

19. Verfahren nach Anspruch 15, dadurch gekennzeichnet, daß zur paketweisen Datenübertragung von der Basisstation zur Mobilstation ein Rundfunkkanal (broadcast channel) benutzt wird und daß die Adressierung und gegebenenfalls die Datensicherung mit an sich bekannten Mitteln durchgeführt werden.

## Claims

1. A method for data transmission in packets in a mobile radio system arranged per se as connecting-through system with mobile stations and base stations, characterised in that
- with the arrangement of a radio connection for data transmission in packets of the mobile station respectively involved, a traffic channel and an identification number valid for the respective data transmission in packets are allocated,
- the transmission of individual packets of data takes place in the allocated traffic channel,
- a common control channel is available to several mobile stations, to which the traffic channel is allocated for data transmission by packets, and
- in the common control channel, packets of data are characterised, using the identification number, as belonging to the respective mobile station.

2. A method according to Claim 1, characterised in that in a mobile radio system according to the GSM standard for transmission from the mobile station to the base station, as control channels in the ALOHA multiple access method RACH channels and time slots of given frames of a dedicated channel are used.

3. A method according to Claim 2, characterised in that the transmission of the packets of data takes place in blocks, in which in each case a block is transmitted in four time slots within a multiframe.

4. A method according to Claim 3, characterised in that from the mobile station in time slots of given frames of a dedicated channel, in addition to further control information, the identification number is transmitted and in remaining time slots of the frames of the dedicated channel data are transmitted, in which in each case four even-numbered and four odd-numbered time slots are allocated to a mobile station.

5. A method according to one of the preceding claims, characterised in that in a mobile radio system according to the GSM standard for transmission from the base station to a mobile station, as control channel the time slots of given frames of a dedicated channel are used.

6. A method according to Claim 5, characterised in that the time slots, which form the common control channel, in each case contain call communications which refer to mobile stations for which the data transmitted in the following time slot are intended, or refer to any other mobile stations which may transmit data in following blocks.

7. A method according to one of Claims 5 or 6, characterised in that in time slots of given frames of a dedicated channel, in addition to further control information a call communication is transmitted for the mobile station involved and in remaining time slots of the frames of the dedicated channel, data are transmitted, in which in each case four even-numbered and four odd-numbered time slots are allocated to a mobile station which is activated for data transmission by packets.

8. A method according to one of the preceding claims, characterised in that the code number comprises seven binary digits.

9. A method according to one of the preceding claims, characterised in that the transmission of the identification number takes place in scrambled form.

10. A method according to one of the preceding claims, characterised in that the transmission of the pockets of data takes place with a code which is also provided for the control channels.

11. A method according to one of the preceding claims, characterised in that in the case of faulty reception of a data block, which is established for example through evaluation of parity bits, the transmitting station in each case is requested by means of an error message to transmit the pocket of data again.

12. A method according to Claim 11, characterised in that the error message is formed by a given value of a bit of an octet containing the identification number.

13. A method according to one of the preceding claims, characterised in that with the transmission from the base station to mobile stations, no regulating takes place of the transmitting power via the received field strength.

14. A method according to one of the preceding claims, characterised in that the data transmission in pockets preferably takes place on the carrier which also transmits the broadcast control channel.

15. A method according to Claim 1, characterised in that with a connection arrangement proceeding from a mobile station, the information that a data transmission in packets is to take place, and the number of blocks to be made available, consisting in each case of several time slots, are transmitted from the mobile station.

16. A method according to Claim 15, characterised in that the information that a data transmission in packets is desired, and the number of data blocks are transmitted directly with the channel request.

17. A method according to Claim 15, characterised in that the information that a data transmission in packets is desired, and the number of data blocks are transmitted when after a channel request the base station has granted an immediate access.

18. A method according to Claim 15, characterised in that the mobile station is called from the base station, that a stand-alone dedicated control channel (SDCCH) is allocated and that a L3 message is transmitted, which indicates the end of the transmission and the one-way characteristic of the channel.

19. A method according to Claim 15, characterised in that for data transmission in packets from the base station to the mobile station, a broadcast channel is used and that the addressing and if necessary the data security are carried out by means known per se.

## Revendications

1. Procédé pour la transmission de données par paquets dans un réseau radiotéléphonique mobile conçu en soi comme un réseau de commutation comportant des postes mobiles et des postes de base, caractérisé
- en ce que lors de l'établissement d'une liaison radio, un canal de circulation et un code valable pour la transmission de données par paquets correspondante sont assignés au poste mobile concerné, en vue de la transmission de données par paquets,
- en ce que la transmission de paquets de données individuels a lieu dans le canal de circulation assigné,
- en ce qu'un canal pilote commun est à la disposition de plusieurs postes mobiles auxquels le canal de circulation est assigné en vue de la transmission de données par paquets, et
- en ce que dans le canal pilote commun, des paquets de données sont identifiés à l'aide du code comme appartenant au poste mobile correspondant.

2. Procédé selon la revendication 1, caractérisé en ce que dans un réseau radiotéléphonique mobile selon la norme GSM, on utilise pour la transmission entre le poste mobile et le poste de base, comme canaux pilotes selon le procédé d'accès multiple ALOHA, des canaux RACH et des intervalles de temps de trames prédéfinies d'un canal spécialisé.

3. Procédé selon la revendication 2, caractérisé en ce que la transmission des paquets de données a lieu par blocs, un bloc étant transmis à chaque fois dans quatre intervalles de temps à l'intérieur d'une trame multiple.

4. Procédé selon la revendication 3, caractérisé en ce que, à partir du poste mobile, le code est transmis pendant les intervalles de temps de trames prédéfinies d'un canal spécialisé, en plus d'autres informations de commande, et pendant les intervalles de temps restants des trames du canal spécialisé, des données sont transmises, étant précisé qu'à chaque fois, quatre intervalles de temps pairs et quatre intervalles de temps impairs sont assignés à un poste mobile.

5. Procédé selon l'une des revendications précédentes, caractérisé en ce que dans un réseau radiotéléphonique mobile selon la norme GSM, on utilise pour la transmission entre le poste de base et un poste mobile, comme canal pilote, les intervalles de temps de trames prédéfinies d'un canal spécialisé.

6. Procédé selon la revendication 5, caractérisé en ce que les intervalles de temps qui forment le canal pilote commun contiennent à chaque fois des messages d'appel qui concernent des postes mobiles auxquels sont destinées les données transmises pendant l'intervalle de temps suivant ou qui concernent n'importe quels autres postes mobiles autorisés à transmettre des données dans des blocs suivants.

7. Procédé selon la revendication 5 ou 6, caractérisé en ce que pendant les intervalles de temps de trames prédéfinies d'un canal spécialisé, un message d'appel est transmis, en plus d'autres informations de commande, pour le poste mobile concerné, et pendant les intervalles de temps restants des trames du canal spécialisé, des données sont transmises, étant précisé qu'à chaque fois, quatre intervalles de temps pairs et quatre intervalles de temps impairs sont assignés à un poste mobile activé pour la transmission de données par paquets.

8. Procédé selon l'une des revendications précédentes, caractérisé en ce que le code comprend sept chiffres binaires.

9. Procédé selon l'une des revendications précédentes, caractérisé en ce que la transmission du code est codée.

10. Procédé selon l'une des revendications précédentes, caractérisé en ce que la transmission des paquets de données a lieu avec un code qui est également prévu pour les canaux pilotes.

11. Procédé selon l'une des revendications précédentes, caractérisé en ce que dans le cas d'une mauvaise réception d'un bloc de données, qui est constatée par exemple grâce à l'évaluation de bits de parité, le poste qui émet est invité à l'aide d'un message d'erreur à transmettre une nouvelle fois le paquet de données.

12. Procédé selon la revendication 11, caractérisé en ce que le message d'erreur est formé par une valeur prédéfinie d'un bit d'un octet contenant le code.

13. Procédé selon l'une des revendications précédentes, caractérisé en ce que, lors de la transmission entre le poste de base et des postes mobiles, il n'y a pas de réglage de la puissance d'émission par l'intermédiaire de l'intensité de champ reçue.

14. Procédé selon l'une des revendications précédentes, caractérisé en ce que la transmission de données par paquets a lieu de préférence sur le support qui transmet aussi le canal pilote radio (broadcast control channel).

15. Procédé selon la revendication 1, caractérisé en ce que lors de l'établissement d'une liaison à partir d'un poste mobile, l'information selon laquelle une transmission de données par paquets doit avoir lieu et le nombre de blocs, formés chacun de plusieurs intervalles de temps, à rendre disponibles sont émis à partir du poste mobile.

16. Procédé selon la revendication 15, caractérisé en ce que l'information selon laquelle une transmission de données par paquets est souhaitée et le nombre de blocs de données sont émis directement avec la demande de canal (channel request).

17. Procédé selon la revendication 15, caractérisé en ce que l'information selon laquelle une transmission de données par paquets est souhaitée et le nombre de blocs de données sont émis si le poste de base a autorisé un accès direct (immediate access) après une demande de canal (channel request).

18. Procédé selon la revendication 15, caractérisé en ce que le poste mobile est appelé par le poste de base, en ce qu'un stand-alone dedicated control channel (SDCCH, canal pilote spécialisé autonome) est attribué et en ce qu'un message L3 est émis, qui indique la fin de la transmission et le caractère unidirectionnel du canal.

19. Procédé selon la revendication 15, caractérisé en ce que pour la transmission de données par paquets du poste de base vers le poste mobile, on utilise un canal radio (broadcast channel), et en ce que l'adressage et éventuellement le contrôle des données sont effectués à l'aide de moyens connus en soi.
